(19) Europäisches Patentamt
European Patent Office
Office européen des brevets

(11) **EP 4 645 421 A1**

(12) **EUROPEAN PATENT APPLICATION**

(43) Date of publication:
**05.11.2025 Bulletin 2025/45**

(21) Application number: **25167791.0**

(22) Date of filing: **01.04.2025**

(51) International Patent Classification (IPC):
**H01M 4/13** (2010.01)  **H01M 4/36** (2006.01)
**H01M 4/505** (2010.01)  **H01M 4/525** (2010.01)
**H01M 4/58** (2010.01)  **C01B 25/45** (2006.01)
**C01G 53/50** (2025.01)  **H01M 4/62** (2006.01)
**H01M 10/0525** (2010.01)

(52) Cooperative Patent Classification (CPC):
**H01M 4/525; C01B 25/45; C01G 53/50; H01M 4/13;
H01M 4/364; H01M 4/366; H01M 4/505;
H01M 4/5825; H01M 4/625;** H01M 4/623;
H01M 10/0525

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240057165**

(71) Applicant: **SAMSUNG SDI CO., LTD.
Yongin-si, Gyeonggi-do 17084 (KR)**

(72) Inventors:
• **KIM, Young-Ki
Yongin-si, Gyeonggi-do 17084 (KR)**

• **CHOI, Aram
Yongin-si, Gyeonggi-do 17084 (KR)**
• **KIM, Sangmi
Yongin-si, Gyeonggi-do 17084 (KR)**
• **DOO, Sungwook
Yongin-si, Gyeonggi-do 17084 (KR)**
• **KANG, Gwiwoon
Yongin-si, Gyeonggi-do 17084 (KR)**
• **LEE, Soonrewl
Yongin-si, Gyeonggi-do 17084 (KR)**

(74) Representative: **Marks & Clerk LLP
15 Fetter Lane
London EC4A 1BW (GB)**

(54) **POSITIVE ELECTRODE AND RECHARGEABLE LITHIUM BATTERY INCLUDING THE SAME**

(57)    Examples of the disclosure include a positive electrode, and a rechargeable lithium battery including the positive electrode. Examples of the disclosure include a positive electrode for a rechargeable lithium battery including a current collector, a first active material layer on the current collector, the first active material layer including a first particle, a first binder, and a first conductive material, and a second active material layer on the first active material layer, second active material layer including a second particle, a second binder, and a second conductive material. The first particle contains a layered compound, the second particle contains an olivine structured compound, the second particle is a single particle, the first binder and the first conductive material constitute a first functional additive, the second binder and the second conductive material constitute a second functional additive.

FIG. 6

EP 4 645 421 A1

## Description

BACKGROUND

Examples of the present disclosure relate to a positive electrode, and a rechargeable lithium battery including the positive electrode. Examples of the disclosure relate to a positive electrode including an olivine-based lithium compound and a rechargeable lithium battery including the positive electrode.

The increased use of battery-powered electronics, such as, e.g., mobile phones, laptop computers, electric vehicles, and the like, has driven a rise in demand for rechargeable batteries having high energy density and high capacity. Accordingly, improving the performance of rechargeable lithium batteries may be advantageous.

Rechargeable lithium batteries typically include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

SUMMARY

Examples of the present disclosure include a positive electrode for a rechargeable lithium battery, the positive electrode being capable of increasing the binding force of a positive electrode active material layer with respect to a current collector, reducing resistance of an electrode plate, and facilitating the preparation of an electrode plate. Examples of the present disclosure also include a rechargeable lithium battery having desired or improved capacity and lifetime characteristics along with high operating voltage and energy density.

An example embodiment of the present disclosure includes a positive electrode for a rechargeable lithium battery, the positive electrode including a current collector, a first active material layer on the current collector, the first active material layer including a first particle, a first binder, and a first conductive material, and a second active material layer on the first active material layer, the second active material layer including a second particle, a second binder, and a second conductive material. The first particle contains a layered compound of Formula 1 below, the second particle contains an olivine structured compound of Formula 2 below, the second particle is a single particle, the first binder and the first conductive material constitute a first functional additive, the second binder and the second conductive material constitute a second functional additive, and a weight ratio of the first functional additive in the first active material layer is lower than a weight ratio of the second functional additive in the second active material layer,

$$\text{Formula 1:} \qquad Li_{a1}Ni_{x1}Co_{y1}Mn_{z1}B1_{c1}O_{2-b1}$$

in Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 \leq b1 \leq 0.05$, and $x1 + y1 + z1 + c1 = 1$ are satisfied, and B1 includes at least one of Ti, Mg, V, Nb, and Al, and

$$\text{Formula 2:} \qquad Li_{a2}Mn_{x2}Fe_{y2}B2_{z2}PO_{4-b2}$$

in Formula 2 above, $0.8 \leq a2 \leq 1.2$, $0.4 \leq x2 \leq 0.8$, $0 \leq y2 \leq 0.6$, $0 \leq z2 \leq 0.05$, $0 \leq b2 \leq 0.05$, and $x2 + y2 + z2 = 1$ are satisfied, and B2 includes at least one of Al, Ti, V, and Mg.

In an example embodiment of the present disclosure, a rechargeable lithium battery includes the positive electrode described above.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:

FIG. 1 is a simplified conceptual view illustrating a rechargeable lithium battery according to example embodiments of the present disclosure;

FIGS. 2 to 5 are schematic views illustrating a rechargeable lithium battery according to an example embodiment, where FIG. 2 illustrates a cylindrical battery, FIG. 3 illustrates a prismatic battery, and FIGS. 4 and 5 illustrate pouch-type batteries;

FIG. 6 is a cross-sectional view illustrating a positive electrode for a rechargeable battery according to example embodiments of the present disclosure;

FIGS. 7 to 9 are enlarged views illustrating a first active material layer according to example embodiments of the present disclosure;

FIG. 10 is an enlarged view illustrating a second active material layer according to an example embodiment of the present disclosure;

FIG. 11 is an enlarged view illustrating a positive electrode active material layer according to Comparative Examples of the present disclosure;

FIG. 12 is an SEM image showing a first particle according to example embodiments of the present disclosure; and

FIG. 13 is an SEM image showing a second particle according to an example embodiment of the present disclosure.

DETAILED DESCRIPTION

In order to sufficiently understand the configuration and effects of the present disclosure, example embodiments of the present disclosure are described with reference to the accompanying drawings. It should be noted, however, that the present disclosure is not limited to the following example embodiments, and may be implemented in various forms and variously modified. The example embodiments herein are provided so that present disclosure is thorough and complete and will fully convey the scope of the present disclosure to those skilled in the art.

Herein, it is understood that when a component is referred to as being "on" another component, the component may be directly on another component, or an intervening third component may be present. In addition, in the drawings, thicknesses of components are exaggerated for effectively describing technical contents. Like reference numerals refer to like elements throughout.

The example embodiments described herein are explained with reference to the cross-sectional views and/or plan views as ideal example views of the present disclosure. In the drawing, the thicknesses of films and regions are exaggerated for effective description of the technical contents. Thus, regions presented as an example in the drawings have general properties, and shapes of the exemplified areas are used to illustrate a specific shape of a device region. Therefore, this should not be construed as limited to the scope of the present disclosure. Although the terms such as first, second, and third are used to describe various components in various example embodiments herein, the components should not be limited to these terms. These terms are used only to distinguish one component from another component. Example embodiments described and exemplified herein include complementary example embodiments thereof.

Terms used herein are not for limiting the present disclosure but for describing the example embodiments. As used herein, the singular forms include the plural forms as well, unless the context clearly indicates otherwise. The meaning of "comprises" and/or "comprising" used herein does not exclude the presence or addition of one or more other components besides a mentioned component.

When the terms "about" or "substantially" are used in this specification in connection with a numerical value, it is intended that the associated numerical value include a tolerance of $\pm 10\%$ around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

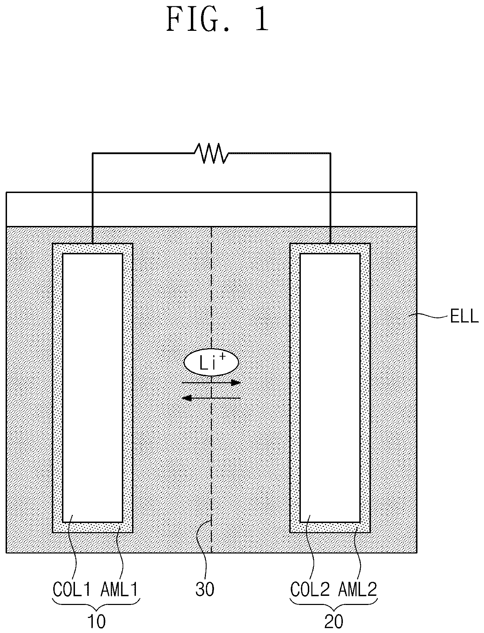

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be located between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery includes a current collector COL1 and a positive electrode active material layer AML1 on the current collector. The positive electrode active material layer AML1 includes a positive electrode active material, and further includes a binder and a conductive material (e.g., an electrically conductive material).

For example, the positive electrode 10 may further include an additive that can constitute a sacrificial positive electrode.

Al may be included as the current collector COL1, but the example embodiment of the present disclosure is not limited thereto.

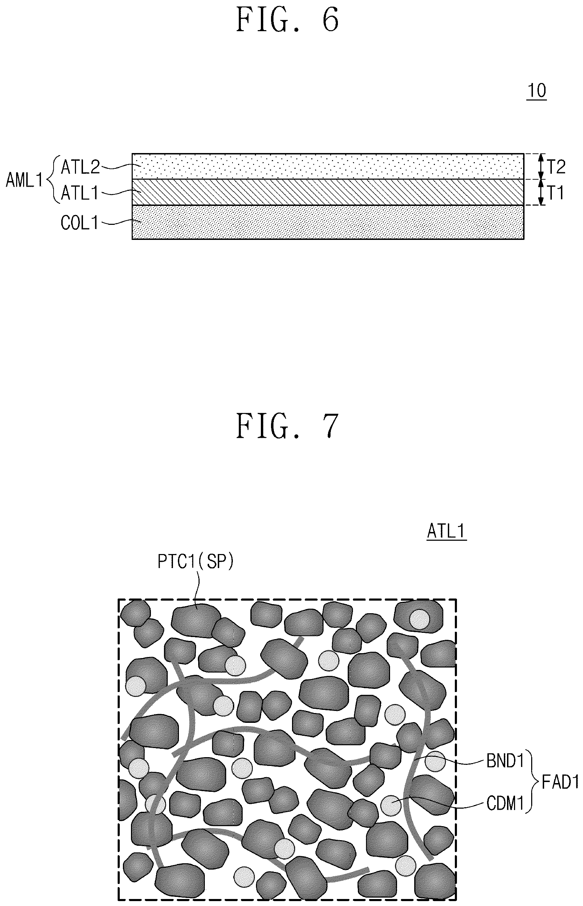

The positive electrode 10 is described in detail below with reference to FIG. 6.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery), and that conducts electrons, may be used in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include at least one of a copper foil, a nickel foil, a stainless steel foil, a titanium foil, a nickel foam, a copper foam, a polymer substrate coated with a conductive metal, or a combination thereof.

Negative Electrode Active **Material**

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. Examples of the crystalline carbon may be or include graphite such as irregular, planar, flaky, spherical, or fibrous natural graphite or artificial graphite, and examples of the amorphous carbon may be or include at least one of soft carbon (low-temperature fired carbon), hard carbon, mesophase pitch carbide, fired cokes, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon, and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1: 1 to about 1:9.

The lithium salt dissolved in the organic solvent may supply lithium ions in a battery, enable a basic operation of a rechargeable lithium battery, and improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI,

$LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

**Rechargeable Lithium Battery**

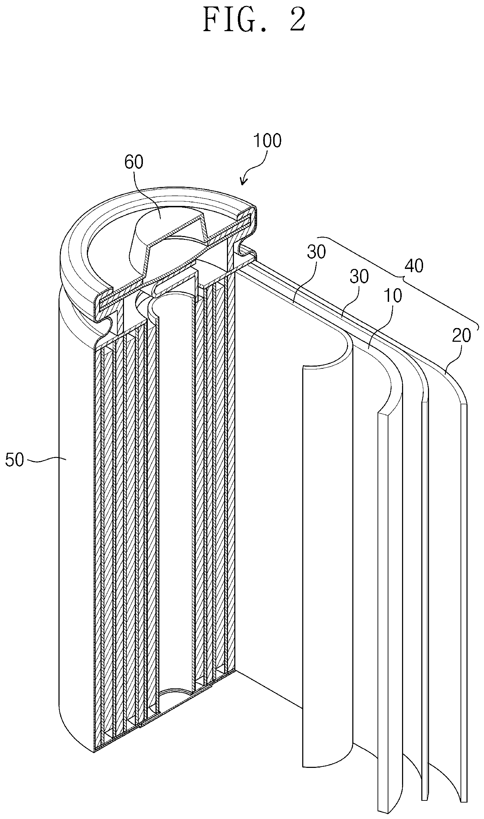

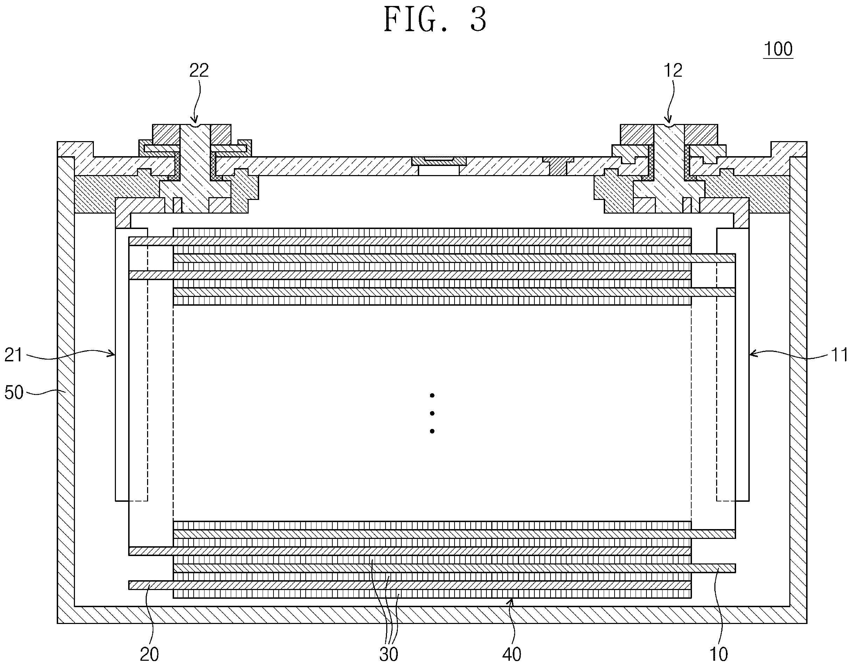

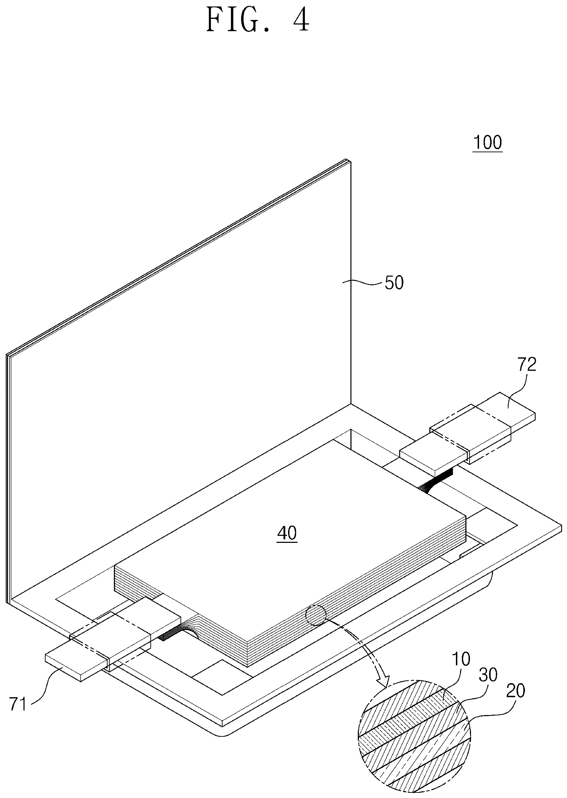

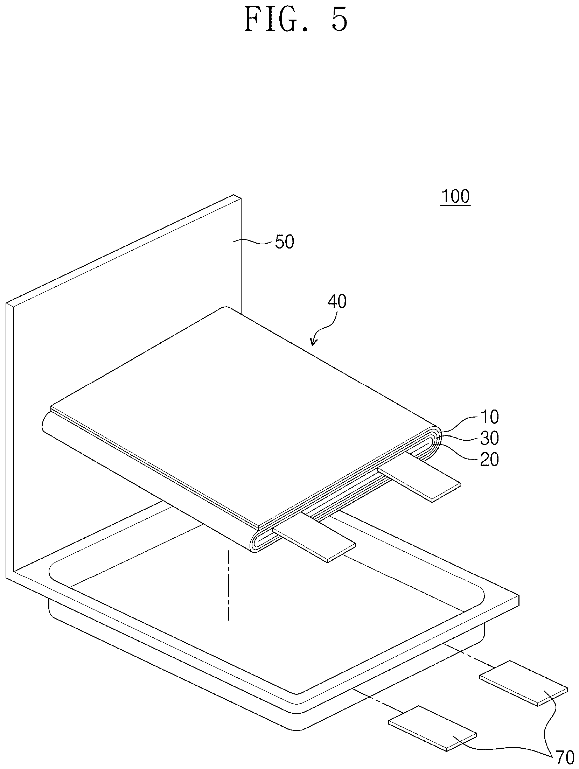

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, and may include, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is a cross-sectional view illustrating a positive electrode for a rechargeable lithium battery, according to example embodiments of the present disclosure. Referring to FIG. 6, as described above, the positive electrode 10 includes a current collector COL1 and a positive electrode active material layer AML1. The positive electrode active material layer AML1 is located on the current collector COL1.

The positive electrode active material layer AML1 includes positive electrode active materials PTC1 and PTC2, which are described below. The positive electrode active material layer AML1 may contain about 90 wt% to about 99 wt% of the positive electrode active materials PTC1 and PTC2 with respect to 100 wt% of the positive electrode active material layer AML1.

The positive electrode active material layer AML1 includes binders BND1 and BND2 and conductive materials CDM1 and CDM2, which are described below. The positive electrode active material layer AML1 may contain about 2.4 wt% to about 6 wt% of each of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. The positive electrode active material layer AML1 includes the first active material layer ATL1 and the second active material layer ATL2, and may thus contain a nano-sized olivine-based compound in large quantities and increase binding force with respect to a current collector, thereby facilitating the preparation of an electrode plate and reducing resistance of an electrode plate. In addition, a rechargeable lithium battery having desired or improved performance may be provided.

The first active material layer ATL1 may have a thickness T1. In an example embodiment, T1 may increase with a rise in weight of the first particle PTC1 included in the first active material layer ATL1. The second active material layer ATL2 may have a thickness T2. In an example embodiment, T2 may increase with a rise in weight of the second particle PTC2 included in the second active material layer ATL2.

The thickness T1 of the first active material layer ATL1 may be smaller than the thickness T2 of the second active material layer ATL2. For example, a thickness ratio T1:T2 of the first active material layer ATL1 and the second active material layer ATL2 may be in a range of about 1:99 to about 49:51. When the thickness ratio T1:T2 of the first active material layer ATL1 to the second active material layer ATL2 satisfies the numerical range described above, the positive electrode active material layer AML1 has improved binding force with respect to the current collector COL1, and may thus facilitate the preparation of an electrode plate and reduce the resistance of an electrode plate. In addition, a rechargeable lithium battery having desired or improved performance may be provided.

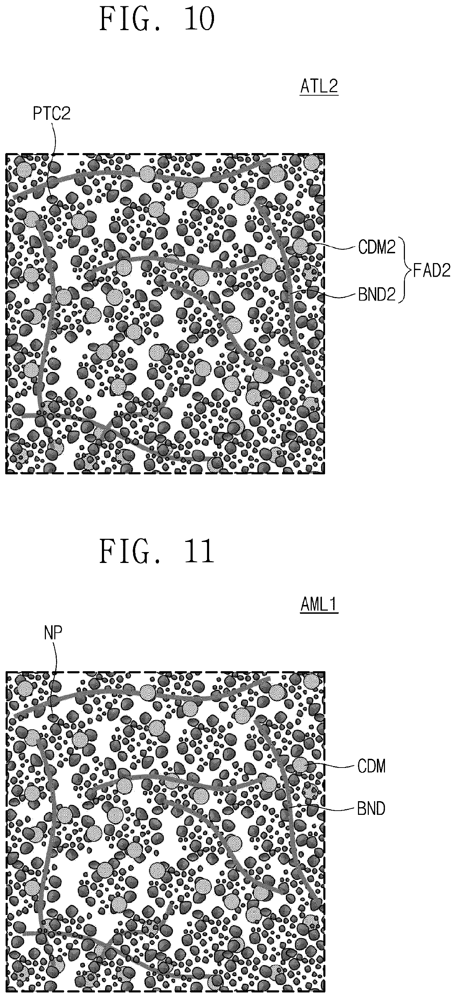

FIGS. 7 to 9 are enlarged views illustrating a first active material layer ATL1 according to example embodiments of the present disclosure. FIG. 10 is an enlarged view illustrating a second active material layer ATL2 according to example embodiments of the present disclosure.

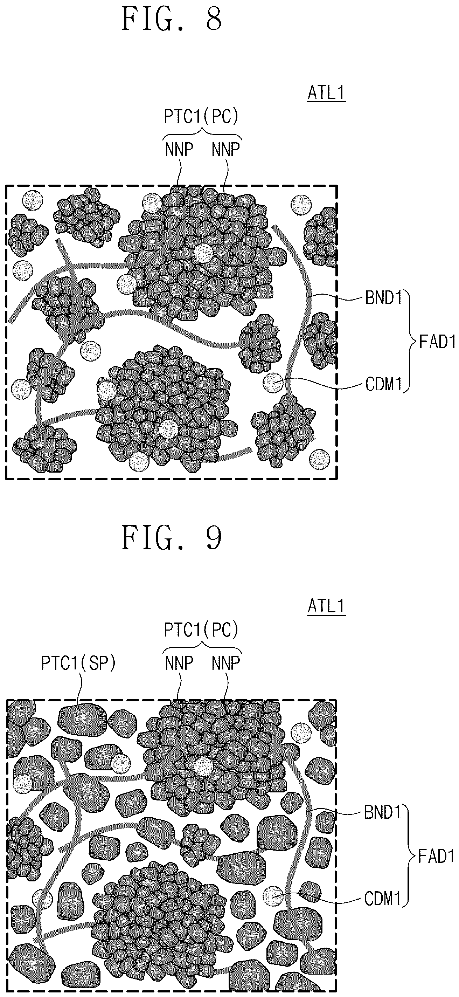

Referring to FIGS. 7 and 9, the first active material layer ATL1 includes a first particle PTC1 and a first functional additive FAD1. The first functional additive FAD1 includes a first binder BND1 and a first conductive material CDM1.

The first active material layer AML1 includes the first active material layer ATL1 containing the first particle PTC1, and may thus reduce the content of the first functional additive FAD1. For example, a weight ratio of the first functional additive FAD1 in the first positive electrode active material layer ATL1 may be in a range of about 0.024 to about 0.04 (e.g. about 2.4 parts by weight to about 4.0 parts by weight with respect to 100 parts by weight of the first active material layer ATL1). The weight ratio of the first functional additive FAD1 in the first active material layer ATL1 may be defined as a weight of the first functional additive FAD1 with respect to a total weight of the first active material layer ATL1.

For example, the content of the first binder BND1 may be in a range of about 1.2 parts by weight to about 2.0 parts by weight with respect to 100 parts by weight of the first active material layer ATL1. The content of the first conductive material CDM1 may be in a range of about 1.2 parts by weight to about 2.0 parts by weight with respect to 100 parts by weight of the first active material layer ATL1.

Referring to FIG. 10, the second active material layer ATL2 includes a second particle PTC2 and a second functional additive FAD2. The second functional additive FAD2 includes a second binder BND2 and a second conductive material CDM2.

Herein, the weight ratio of the second functional additive FAD2 in the second active material layer ATL2 is greater than the weight ratio of the first functional additive FAD1 in the first active material layer ATL1.

A ratio of the weight ratio of the second functional additive FAD2 to the weight ratio of the first functional additive FAD1 (weight ratio of the second functional additive/weight ratio of the first functional additive) may be in a range of about 1.5 to about 3. When the ratio of the weight ratio of the second functional additive FAD2 to the weight ratio of the first functional additive FAD1 satisfies the numerical range described above, the positive electrode active material layer AML1 has improved binding force with respect to the current collector COL1, and may thus facilitate the preparation of an electrode plate and reduce the resistance of an electrode plate. In addition, a rechargeable lithium battery having desired or improved performance may be provided.

For example, a weight ratio of the second functional additive FAD2 in the second positive electrode active material layer ATL2 may be in a range of about 0.04 to about 0.06 (e.g. about 4.0 parts by weight to about 6.0 parts by weight with respect to 100 parts by weight of the second active material layer ATL2). The weight ratio of the second functional additive FAD2 in the second active material layer ATL2 may be defined as a weight of the second functional additive FAD2 with respect to a total weight of the second active material layer ATL2.

The content of the second binder BND2 may be greater than the content of the first binder BND1. For example, the content of the second binder BND2 may be in a range of about 2.0 parts by weight to about 3.0 parts by weight with respect to 100 parts by weight of the second active material layer ATL2.

The content of the second conductive material CDM2 may be greater than the content of the first conductive material CDM1. The content of the second conductive material CDM2 may be in a range of about 2.0 parts by weight to about 3.0 parts by weight with respect to 100 parts by weight of the second active material layer ATL2.

The binders BND1 and BND2 may be configured to attach the positive electrode active material particles PTC1 and PTC2, and also to attach the positive electrode active material PTC1 to the current collector COL1 well. Typical examples of the binders BND1 and BND2 may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the example embodiment of the present disclosure is not limited thereto.

The conductive materials CDM1 and CDM2 may be configured to impart conductivity (e.g., electrical conductivity) to the electrode. Any material that does not cause chemical change (e.g., does not cause an undesirable chemical change in the rechargeable lithium battery), and that conducts electrons, may be used in the battery. Examples of the conductive materials CDM1 and CDM2 may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

An interface between the first active material layer ATL1 and the second active material layer ATL2 may not be clearly distinguishable through SEM images and the like. However, the interface between the first active material layer ATL1 and the second active material layer ATL2 may be inferred by changes in constituent materials and composition between the layers.

Hereinafter, each, or at least one, of the first particle PTC1 and the second particle PTC2 is described in more detail.

## First Particle PTC1

Referring back to FIG. 7, the first particle PTC1 may be in the form of a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be a particle containing several crystals. The single particle may be in an isolated form. Alternatively, the single particle may be in the form in which about 2 to about 100 single particles are attached to one another.

In an example embodiment, the first particle PTC1 may be constituted with or may include one single particle. In an example embodiment, the first particle PTC1 may have a form in which a plurality of single particles are attached together. The positive electrode active material according to an example embodiment of the present disclosure includes the first particle PTC1 in the form of a single particle, and may thus allow rechargeable batteries to obtain high capacity and high energy density. Herein, the first particle PTC1, which is a single particle, may be defined as a small particle SP.

In an example embodiment, the first particle PTC1 may include a first coating layer on the surface thereof. The first particle PTC1 may include the first coating layer, and may thus effectively reduce or prevent structural collapse caused by repeated charging/discharging. Accordingly, rechargeable batteries may have improved lifetime characteristics.

The first coating layer may include at least one of a boron-containing compound, an aluminium-containing compound, or a combination thereof. Metal-containing compounds in the first coating layer may be or include, for example, at least one of metal oxides, metal hydroxides, metal carbonates, composites thereof, or mixtures thereof. The metal-containing compounds may further include other metals or non-metallic elements. For example, the first coating layer may further include at least one of lithium, manganese, and/or nickel.

A method of measuring the metal content in the first coating layer of the first particle PTC1 may include performing scanning electron microscopy and energy dispersive X-ray spectroscopy (SEM-EDS) on the first particle PTC1. Through the analysis described above, the content of boron and/or aluminium in the first coating layer may be determined. In addition to SEM-EDS, methods of measuring the metal content in the first coating layer may include inductively coupled plasma-mass spectrometry (ICP-MS), inductively coupled plasma optical emission spectroscopy (ICP-OES), and the like.

The size of the first particle PTC1 may be in micro units. When the first active material layer ATL1 including the first particle PTC1 is introduced, the positive electrode active material layer AML1 may contain a nano-sized olivine-based compound in large quantities, and may have a greater binding force with respect to a current collector. This, in turn, may facilitate the preparation of an electrode plate, and reduce the resistance of an electrode plate. In addition, a rechargeable lithium battery having desired or improved performance may be provided.

The first particle PTC1 may have an average particle diameter in a range of about 2 $\mu$m to about 15 $\mu$m, about 3 $\mu$m to about 10 $\mu$m, or about 2 $\mu$m to about 5 $\mu$m.

In an example embodiment, the particle diameter may be obtained by measuring a diameter by randomly selecting about 30 first particles PTC1 on an electron microscope image of a positive electrode active material, and taking a diameter of the particles at an accumulated volume of about 50 vol% in particle size distribution as the average particle diameter (D50).

The first particle PTC1 is a nickel-based active material and includes a lithium nickel-based composite oxide. For example, the first particle PTC1 may include a high nickel-based positive electrode active material containing a high content of nickel. The high nickel-based positive electrode active material may achieve high capacity and high performance. For another example, the first particle PTC1 may include a mid nickel-based positive electrode active material containing an intermediate content of nickel. The mid nickel-based positive electrode active material may achieve high capacity and high performance.

The first particle PTC1 includes a layered lithium nickel-based composite oxide represented by Formula 1 below.

$$\text{Formula 1:} \qquad Li_{a1}Ni_{x1}Co_{y1}Mn_{z1}B1_{c1}O_{2-b1}$$

In Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 \leq b1 \leq 0.05$, and $x1 + y1 + z1 + c1 = 1$ are satisfied. For example, c1 may be equal to about 0.005.

B1 may be or include a dopant with which the first particle PTC1 is doped. B1 includes at least one of Ti, Mg, V, Nb, and Al. For example, B1 may be or include Al.

Referring back to FIG. 8, for another example, the first particle PTC1 is in the form of a polycrystal and may include a secondary particle in which at least two primary particles NNP are aggregated. For example, one first particle PTC1 may include a plurality of primary particles NNP aggregated together. The first particle PTC1 composed of or including a plurality of primary particles NNP may be amorphous. For example, the first particle PTC1 composed of or including a plurality of primary particles NNP may be substantially in the shape of sphere or oval. Herein, the first particle PTC1, which is a secondary particle, may be defined as a large particle PC.

In an example embodiment, the average particle diameter (D50) may indicate a particle diameter when a cumulative volume is about 50 volume% in a particle size distribution. The average particle diameter (D50) of the first particle PTC1 may be a value measured using, e.g., a particle size analyzer. Accordingly, the secondary particle may have an average particle diameter (D50) in a range of about 10 $\mu$m to about 25 $\mu$m or about 12 $\mu$m to about 18 $\mu$m.

The primary particles NNP may have a particle diameter of about 8 $\mu$m or less. For example, the primary particles NNP may have a particle diameter in a range of about 2 $\mu$m to about 8 $\mu$m, or about 4 $\mu$m to about 5 $\mu$m. For example, the particle diameter may indicate a diameter measured by randomly selecting about 30 primary particles NNP on an electron micrograph of a positive electrode active material. The particle diameter of the primary particles NNP may be substantially uniform.

Herein, the first particle PTC1 may be present as a small particle SP (see FIG. 7) or a large particle PC (see FIG. 8). In addition, the first particle PTC1 may be or include a positive electrode active material including the small particle SP and the large particle PC.

Herein, both the small particle SP and the large particle PC may be interpreted to indicate the first particle PTC1. In addition, the first particle PTC1 may be interpreted to indicate one containing the small particle SP and the large particle PC.

Herein, referring back to FIG. 9, the case in which the first particle PTC1 is present in the mixed form of the small particle SP and the large particle PC, or as a mixture of the large particle PC and the small particle SP in a positive electrode active material, may be called bimodal. That is, the first particle PTC1 may include both a single particle and a secondary particle.

The first particle PTC1 may have a small Brunauer-Emmett-Teller (BET) specific surface area. The first particle PTC1 may have a smaller specific surface area than the second particle PTC2. For example, the first particle PTC1 may have a BET specific surface area in a range of about 0.8 $m^2$/g to about 1.2 $m^2$/g. Accordingly, a small amount of binder may be used in combination with a nano-sized olivine-based compound.

### Second Particle PTC2

Referring back to FIG. 10, the second particle PTC2 is in the form of a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be a particle containing several crystals. The single particle may be in an isolated form. Alternatively, the single particle may be in the form in which about 2 to about 100 single particles are attached to one another. That is, the second particle PTC2 may be provided in various sizes. For example, the second particle PTC2 may have an average particle diameter in a range of about 100 nm to about 2 $\mu$m or about 500 nm to about 2 $\mu$m, for example, about 1 $\mu$m. The second particle PTC2 may have a minimum particle diameter in a range of about 200 nm to about 500 nm, or about 200 nm to about 300 nm. For example, the minimum particle diameter may indicate a diameter measured by randomly selecting about 30 primary particles on an electron micrograph of a positive electrode active material.

The second particle PTC2 may have an average particle diameter (D50) in a range of about 100 nm to about 2 $\mu$m or about 500 nm to about 2 $\mu$m. For example, the second particle PTC2 may have an average particle diameter of about 1 $\mu$m. In an example embodiment, the average particle diameter may be measured through a particle size analyzer. The average particle diameter may indicate a particle diameter when a cumulative volume is about 50 vol% in particle size distribution.

The second particle PTC2 includes an olivine structured compound of Formula 2 below.

$$\text{Formula 2:} \qquad Li_{a2}Mn_{x2}Fe_{y2}B2_{z2}PO_{4-b2}$$

In Formula 2 above, $0.8 \leq a2 \leq 1.2$, $0.4 \leq x2 \leq 0.8$, $0 \leq y2 \leq 0.6$ (e.g. $0.2 \leq y2 \leq 0.6$), $0 \leq z2 \leq 0.05$, $0 \leq b2 \leq 0.05$, and $x2 + y2 + z2 = 1$ are satisfied. For example, $z2$ may be equal to about 0.002.

B2 may be or include a dopant with which the second particle PTC2 is doped. B2 includes at least one of Al, Ti, V, and Mg. B2 controls primary particles to be substantially uniform in size, and thus rechargeable lithium batteries may have improved charging/discharging efficiency, low-temperature properties, and lifetime characteristics.

In an example embodiment, the second particle PTC2 may include a coating layer on a surface thereof. The coating layer may substantially entirely cover the surface of the second particle PTC2, or may partially cover the surface of the second particle PTC2. For example, the coating layer may include carbon and/or a carbon-containing compound. The second particle PTC2 may have improved structural stability and electrical conductivity through the coating layer.

The coating layer may further include at least one of a titanium-containing compound, a magnesium-containing compound, and a vanadium-containing compound. Metal-containing compounds, such as titanium-containing compounds, magnesium-containing compounds, and vanadium-containing compounds, may be or include, for example, metal oxides, metal hydroxides, metal carbonates, composites thereof, or mixtures thereof. The metal-containing compounds may further include other metals or non-metallic elements. For example, the metal-containing compounds may further include lithium.

The second particle PTC2 may further include carbon derived from the coating layer described above. The second particle PTC2 may have a carbon element content in a range of about 0.5 wt% to about 10 wt%, about 1 wt% to about 3 wt%, or about 1.5 wt% to about 2.5 wt%.

The second particle PTC2 may have a large BET specific surface area. For example, the second particle PTC2 may have a BET specific surface area in a range of about 10 $m^2/g$ to about 30 $m^2/g$. For example, the second particle PTC2 may have a BET specific surface area of about 20$m^2/g$.

According to Comparative Examples of the present disclosure in FIG. 11, the positive electrode active material layer AML1 may only include a nanomorphous positive electrode active material. The nanomorphous positive electrode active material includes an olivine-based compound, and may include nano-sized particles NP. For example, the olivine-based compound may be represented by a formula such as Formula 2 above. For example, because of the nano-sized particles NP agglomerate, the nanomorphous positive electrode active material may not be spherical. The nanomorphous positive electrode active material may have an irregular shape. The nanomorphous positive electrode active material may be provided in various sizes. For example, the nanomorphous positive electrode active material may have an average particle diameter in a range of about 500 nm to about 2.5 μm, or about 1 μm. The nanomorphous positive electrode active material may have a minimum particle diameter in a range of about 100 nm to about 500 nm, or about 200 nm to about 300 nm. The average particle diameter according to Comparative Examples may be measured through a particle size analyzer. The average particle diameter (D50) may indicate the diameter of particles at an accumulated volume of about 50 vol% in particle size distribution. For example, the minimum particle diameter may indicate a diameter measured by randomly selecting about 30 primary particles from an electron micrograph of the nanomorphous positive electrode active material. The nanomorphous positive electrode active material may have a porosity that is greater than about 40%. Here,

$$n = \frac{V_p}{V_t}$$

porosity (n) may be defined as the pore volume ($V_p$) divided by the total volume ($V_t$) of a particle, *or* . A span value, which is the standard deviation around the mean value, of the nanomorphous positive electrode active material, analyzed through a particle size analyzer, may be deviated from (e.g. outside) a range from about 0.3 to about 0.75. In this specification, the span value may be defined by the equation of (D90-D10)/D50. D10, D50 and D90 may refer to the particle size of the particles with cumulative volumes of 10 vol%, 50 vol% and 90 vol%, respectively, in the particle size distribution.

Referring back to FIG. 10, the second active material layer ATL2 according to an example embodiment of the present disclosure includes the second particle PTC2. The second particle PTC2 is a lithium iron phosphate-based compound having an olivine structure, and is highly stable and has high chemical stability. For example, this compound has desired or improved lifetime characteristics resulting from the stable structure compared to other positive electrode materials, but has degradation in lifetime characteristics at high voltage, leading to limited use of operating voltage. The second particle PTC2 contains manganese (Mn) and may improve high voltage characteristics and energy density compared to general lithium iron phosphate-based compounds.

When the size of the particle is too small, the binding force between a current collector and a positive electrode active material is low, and accordingly, an electrode plate may be hardly processed, and a binder may be required in large quantities (see FIG. 11).

As shown in FIGS. 6 to 10, when the first active material layer ATL1 is introduced between the current collector COL1 and the second active material layer ATL2, and the first particle PTC1 and the second particle PTC2 are mixed in an appropriate ratio, an electrode plate may have an improved binding force, and the binder BND may be less required. In addition, the mixing may improve capacity, density characteristics, high temperature stability, and lifetime characteristics.

A weight ratio of the first particle PTC1 and the second particle PTC2 included in the first active material layer ATL1 and the second active material layer ATL2 may be in a range of about 10:90 to about 30:70. For example, the weight ratio of the first particle PTC1 and the second particle PTC2 included in the first active material layer ATL1 and the second active material layer ATL2 may be in a range of about 15:85 to about 30:70, about 20:80 to about 30:70, or about 30:70.

When the weight ratio of the first particle PTC1 and the second particle PTC2 satisfies any of the ranges described above, the positive electrode active material layer AML1 may have an improved binding force with respect to the current collector COL1. Accordingly, a rechargeable lithium battery having reduced resistance may be provided. In addition, when the weight ratio of the first particle PTC1 and the second particle PTC2 satisfies any of the ranges described above, a rechargeable lithium battery having desired or improved performance may be provided.

A total doping amount of Mn may be in a range of about 0.49 to about 0.53. For example, the total doping amount of Mn may be about 0.51. The total doping amount of Mn (A+B) may be defined as the sum of a doping amount (A) of Mn contained in the first active material layer ATL1 and a doping amount (B) of Mn contained in the second active material layer ATL2. The doping amount (A) of Mn included in the first active material layer ATL1 may be defined as a product of the Mn doping amount (z1 in Formula 1) in the first particle PTC1 and the weight ratio of the first particle PTC1. The doping amount (B) of Mn included in the second active material layer ATL2 may be defined as a product of the Mn doping amount (x2 in Formula 2) in the second particle PTC2 and the weight ratio of the second particle PTC2.

When the total doping amount of Mn satisfies the ranges described above, the positive electrode active material layer AML1 may have an improved binding force with respect to the current collector COL1. Accordingly, a rechargeable lithium battery having a reduced resistance may be provided. In addition, a rechargeable lithium battery having desired or improved performance may be provided.

The positive electrode for a rechargeable lithium battery according to example embodiments of the present disclosure has the following effects.

A relatively large amount of the binder BND may be required to attach nano-sized particles NP (see FIG. 11) having a small average particle diameter to the current collector COL1 (see FIG. 1), whereas a relatively small amount of the first binder BND1 may be required to fix the first particle PTC1 having a small BET specific surface area and a large average particle diameter onto the current collector COL1 (see FIG. 1). The positive electrode active material layer AML1 according to an example embodiment of the present disclosure introduces the first active material layer ATL1 including the first particle PTC1, and may thus contain a nano-sized olivine-based compound in large quantities and increase binding force with respect to a current collector, thereby facilitating the preparation of an electrode plate and reducing resistance of an electrode plate. In addition, a rechargeable lithium battery having a desired or improved capacity and lifetime characteristics along with high operating voltage and energy density may be provided.

Hereinafter, the present disclosure is described in more detail through Examples. However, Examples are only illustrations for describing the present disclosure, and the scope of the present disclosure is not limited to Examples below.

## Preparation Example 1: Preparation of Small NCM Particle

A small particle precursor was prepared using a coprecipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60: 10:30 to prepare a metal raw material mixture. The metal raw material mixture, aqueous ammonia, and sodium hydroxide were added into a reactor and subjected to reactions. The slurry solution in the reactor was filtered and washed with high purity distilled water. The washed material was dried in a hot air oven at 210 °C for 24 hours to obtain a small particle precursor ($Ni_{0.6}Co_{0.1}Mn_{0.3}(OH)_2$) powder having an average particle diameter of about 4 $\mu m$.

The small particle precursor and anhydrous lithium hydroxide (LiOH) were dry mixed using a Henschel mixer. Lithium and transition metal were mixed at a molar ratio of about 1.05:1. The transition metal is the sum total of transition metals contained in the mid nickel-based precursor (Ni+Co+Mn). A melting agent was further added to the mixture, and the mixture was heat treated (i.e., firing process) at about 910 °C for 8 hours in an oxygen atmosphere to synthesize small lithium composite oxide particles. The particles were ground using a jet mill at a pressure of 3 bar.

Aluminium oxide was added to the oxide and the mixture was subsequently subjected to a second heat treatment at 800 °C for 8 hours in an oxygen atmosphere to prepare a small NCM particle. The small NCM particle was represented by Formula of $LiNi_{0.6}Co_{0.1}Mn_{0.3}O_2$.

## Preparation Example 2: Preparation of Large NCM Particle

A large particle precursor was prepared using a coprecipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60: 10:30 to prepare a metal raw material mixture. A diluted solution of aqueous ammonia ($NH_4OH$) and sodium hydroxide (NaOH) as a precipitant were prepared to form a complex. Thereafter, the metal raw material mixture, aqueous ammonia, and sodium hydroxide were added into a reactor. Sodium hydroxide was added to maintain the pH of the mixture in the reactor. The mixture was subjected to the reaction for about 20 hours while being stirred in the reactor. The slurry solution in the reactor was filtered and washed with high purity distilled water. The washed material was dried in a hot air oven at 210 °C for 24 hours to obtain a large particle precursor ($Ni_{0.6}Co_{0.1}Mn_{0.3}(OH)_2$) powder having an average particle diameter of about 14 $\mu m$.

The large particle precursor and anhydrous lithium hydroxide (LiOH) were dry mixed using a Henschel mixer. Lithium and transition metal were mixed at a molar ratio of about 1.05:1. The transition metal is the sum total of transition metals contained in the large particle precursor (Ni+Co+Mn). The mixture was heat treated (i.e., firing process) at about 850 °C for 15 hours in an oxygen atmosphere to synthesize large lithium composite oxide particles. The particles were ground using a jet mill at a pressure of 3 bar.

Aluminium oxide was added to the oxide and the mixture was subsequently subjected to a second heat treatment at 800 °C for 8 hours in an oxygen atmosphere to prepare a large NCM particle. The large NCM particle was represented by Formula of $LiNi_{0.6}Co_{0.1}Mn_{0.3}O_2$.

## Preparation Example 3: Preparation of Bimodal NCM

The small lithium composite oxide particle of Preparation Example 1 and the large lithium composite oxide particle of Preparation Example 2 were mixed at a weight ratio of 70:30 to prepare a bimodal particle.

**Preparation Example 4: Preparation of Lithium Manganese Iron Phosphate (LMFP) Particle in the form of Single Particle**

A manganese iron phosphate precursor ($Mn_{0.6}Fe_{0.4}PO_4$) and lithium carbonate were added to water at a molar ratio of (Mn+Fe):Li=1:1.03. 10 wt% of glucose was further added to the mixture. The mixture was subjected to a wet grinding process through ball milling. The mixture was evaporated to dryness on a heating tray and subsequently placed and dried in a vacuum oven at 85 °C for 4 hours. The dried mixture was fired at 650 °C for 10 hours in a nitrogen atmosphere. The fired product was ground at a rotation speed of 8000 rpm to obtain an olivine-based compound particle in the form of a single particle. The olivine-based compound particle was represented by Formula of approximately $LiMn_{0.6}Fe_{0.4}PO_4$.

**Example 1: Preparation of Positive Electrode including First Active Material Layer and Second Active Material Layer**

The bimodal NCM particle, the first binder (polyvinylidene fluoride), and the first conductive material (carbon black) were dispersed in N-methylpyrrolidone at a weight ratio of 0.976:0.012:0.012 to prepare a first active material slurry.
The LMFP particle in the form of a single particle, a second binder (polyvinylidene fluoride), and a second conductive material (carbon black) were dispersed in N-methylpyrrolidone at a weight ratio of 0.94:0.03:0.03 to prepare a second active material slurry.
The first active material slurry was applied onto a 15 μm thick aluminium (Al) thin film, which is a current collector, and dried to form a first active material layer. The second active material slurry was applied onto the first active material layer and dried to form a second active material layer. The first active material layer and the second active material layer were formed such that the bimodal NCM in the first active material layer, and the LMFP particle in the form of a single particle in the second active material layer were at a weight ratio of 30:70. Through a roll press, a positive electrode in which the aluminium current collector, the first active material layer, and the second active material layer were stacked in this order was prepared. A thickness ratio of the first active material layer and the second active material layer was 3:7.

**Example 2: Preparation of Positive Electrode including First Active Material Layer and Second Active Material Layer**

A positive electrode was prepared in the same manner as in Example 1, with a difference that the small NCM particle, the first binder (polyvinylidene fluoride), and the first conductive material (carbon black) were dispersed in N-methylpyrrolidone at a weight ratio of 0.976:0.012:0.012 to prepare a first active material slurry.

**Example 3: Preparation of Positive Electrode including First Active Material Layer and Second Active Material Layer**

A positive electrode was prepared in the same manner as in Example 1, with a difference that the large NCM particle, the first binder (polyvinylidene fluoride), and the first conductive material (carbon black) were dispersed in N-methylpyrrolidone at a weight ratio of 0.976:0.012:0.012 to prepare a first active material slurry.

**Comparative Example 1: Preparation of Positive Electrode including One Active Material Layer**

The small NCM particle, the first binder (polyvinylidene fluoride), and the first conductive material (carbon black) were dispersed in N-methylpyrrolidone at a weight ratio of 0.976:0.012:0.012 to prepare a first active material slurry. The first active material slurry was applied onto a 15 μm thick aluminium (Al) thin film, which is a current collector, and dried to form a first active material layer. Through a roll press, a positive electrode in which the aluminium current collector and the first active material layer were stacked in this order was prepared.

**Comparative Example 2: Preparation of Positive Electrode including One Active Material Layer**

A positive electrode was prepared in the same manner as in Comparative Example 1, with a difference that the LMFP particle in the form of a single particle, the first binder (polyvinylidene fluoride), and the first conductive material (carbon black) were dispersed in N-methylpyrrolidone at a weight ratio of 0.94:0.03:0.03 to prepare a first active material slurry.

**Comparative Example 3: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 70:30, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 4: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 60:40, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 5: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 50:50, and the mixture was dispersed in N-methylpyrrolidone along with the first binder (polyvinylidene fluoride) and the first conductive material (carbon black) at a weight ratio of 0.48:0.48:0.02:0.02 to prepare a first active material slurry.

**Comparative Example 6: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 40:60, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 7: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 30:70, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 8: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 20:80, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 9: Preparation of Positive Electrode including One Active Material Layer**

A positive electrode was prepared in the same manner as in Comparative Example 1, with a difference that the small NCM particle and the LMFP particle in the form of a single particle were mixed to be present at a weight ratio of 10:90, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 10: Preparation of Positive Electrode including One Active Material Layer**

A positive electrode was prepared in the same manner as in Comparative Example 1, with a difference that the large NCM particle, the first binder (polyvinylidene fluoride), and the first conductive material (carbon black) were dispersed in N-methylpyrrolidone at a weight ratio of 0.976:0.012:0.012 to prepare a first active material slurry.

**Comparative Example 11: Preparation of Positive Electrode including One Active Material Layer**

A positive electrode was prepared in the same manner as in Comparative Example 1, with a difference that the large NCM particle and the LMFP particle in the form of a single particle were mixed to be present at a weight ratio of 30:70, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 12: Preparation of Positive Electrode including One Active Material Layer**

A positive electrode was prepared in the same manner as in Comparative Example 1, with a difference that the bimodal NCM particle, the first binder (polyvinylidene fluoride), and the first conductive material (carbon black) were dispersed in N-methylpyrrolidone at a weight ratio of 0.976:0.012:0.012 to prepare a first active material slurry.

**Comparative Example 13: Preparation of Positive Electrode including One Active Material Layer**

A positive electrode was prepared in the same manner as in Comparative Example 1, with a difference that the bimodal NCM particle and the LMFP particle in the form of a single particle were mixed to be present at a weight ratio of 30:70, and the mixture was dispersed in N-methylpyrrolidone along with the first binder (polyvinylidene fluoride) and the first conductive material (carbon black) to prepare a first active material slurry to satisfy the amount described in Table 2.

**Comparative Example 14: Preparation of Positive Electrode including First Active Material Layer and Second Active Material Layer**

A positive electrode with FAD2/FAD1=0.83 was prepared.
A positive electrode was prepared in the same manner as in Example 1, with a difference that the bimodal NCM particle, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a single particle, the second binder (polyvinylidene fluoride), and the second conductive material (carbon black) were dispersed in N-methylpyrrolidone at a weight ratio of 0.98:0.01:0.01 to prepare a second active material slurry.

**Reference Example 1: Preparation of Positive Electrode including First Active Material Layer and Second Active Material Layer**

A positive electrode with FAD2/FAD1=3.33 was prepared.
A positive electrode was prepared in the same manner as in Example 1, with a difference that the bimodal NCM particle, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a single particle, the second binder (polyvinylidene fluoride), and the second conductive material (carbon black) were dispersed in N-methylpyrrolidone at a weight ratio of 0.92:0.04:0.04 to prepare a second active material slurry.

**Preparation of Rechargeable Lithium Battery**

A 2032 type coin half-cell was prepared using the prepared positive electrode and a lithium metal counter electrode as a counter electrode. A separator (thickness: about 16 $\mu$m) formed a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M LiPF$_6$ with a mixed solvent containing ethylene carbonate (EC), ethylmethyl carbonate (EMC), and dimethyl carbonate (DMC) in a volume ratio of 3:4:3 was used.
The details of Examples 1 to 3, Comparative Examples 1 to 14, and Reference Example 1 are illustrated in Table 1 and Table 2.

Table 1:

| Item | Electrode plate structure | Mn doping content when mixed | Content of particle (wt%) | |
| --- | --- | --- | --- | --- |
| | | | NCM particle (Form/wt%) | LMFP particle in single particle form |
| Example 1 | Double layer | 0.51 | Bimodal/30 | 70 |
| Example 2 | Double layer | 0.51 | Small particle/30 | 70 |
| Example 3 | Double layer | 0.51 | Large particle/30 | 70 |
| Comparative Example 1 | Single layer | - | Small particle/100 | - |
| Comparative Example 2 | Single layer | - | - | 100 |

(continued)

| Item | Electrode plate structure | Mn doping content when mixed | Content of particle (wt%) | |
|---|---|---|---|---|
| | | | NCM particle (Form/wt%) | LMFP particle in single particle form |
| Comparative Example 3 | Single layer | 0.39 | Small particle/70 | 30 |
| Comparative Example 4 | Single layer | 0.42 | Small particle/60 | 40 |
| Comparative Example 5 | Single layer | 0.45 | Small particle/50 | 50 |
| Comparative Example 6 | Single layer | 0.48 | Small particle/40 | 60 |
| Comparative Example 7 | Single layer | 0.51 | Small particle/30 | 70 |
| Comparative Example 8 | Single layer | 0.54 | Small particle/20 | 80 |
| Comparative Example 9 | Single layer | 0.57 | Small particle/10 | 90 |
| Comparative Example 10 | Single layer | - | Large particle/100 | - |
| Comparative Example 11 | Single layer | 0.51 | Large particle/30 | 70 |
| Comparative Example 12 | Single layer | - | Bimodal/100 | - |
| Comparative Example 13 | Single layer | 0.51 | Bimodal/30 | 70 |
| Comparative Example 14 | Double layer | 0.51 | Bimodal/30 | 70 |
| Reference Example 1 | Double layer | 0.51 | Bimodal/30 | 70 |

Table 2:

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD1 |
|---|---|---|---|---|---|
| | First binder | First conductive material | Second binder | Second conductive material | |
| Example 1 | 1.2 | 1.2 | 3.0 | 3.0 | 2.5 |
| Example 2 | 1.2 | 1.2 | 3.0 | 3.0 | 2.5 |
| Example 3 | 1.2 | 1.2 | 3.0 | 3.0 | 2.5 |
| Comparative Example 1 | 1.2 | 1.2 | - | - | - |
| Comparative Example 2 | 3.0 | 3.0 | - | - | - |
| Comparative Example 3 | 2.0 | 2.0 | - | - | - |
| Comparative Example 4 | 2.0 | 2.0 | - | - | - |
| Comparative Example 5 | 2.0 | 2.0 | - | - | - |
| Comparative Example 6 | 2.0 | 2.0 | - | - | - |
| Comparative Example 7 | 2.0 | 2.0 | - | - | - |
| Comparative Example 8 | 2.0 | 2.0 | - | - | - |

(continued)

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD 1 |
|---|---|---|---|---|---|
| | First binder | First conductive material | Second binder | Second conductive material | |
| Comparative Example 9 | 2.0 | 2.0 | - | - | - |
| Comparative Example 10 | 1.2 | 1.2 | - | - | - |
| Comparative Example 11 | 2.0 | 2.0 | - | - | - |
| Comparative Example 12 | 1.2 | 1.2 | - | - | - |
| Comparative Example 13 | 2.0 | 2.0 | - | - | - |
| Comparative Example 14 | 1.2 | 1.2 | 1.0 | 1.0 | 0.83 |
| Reference Example 1 | 1.2 | 1.2 | 4.0 | 4.0 | 3.33 |

<u>**Evaluation Example** 1</u>: Analysis of Positive Electrode Active Material Surface

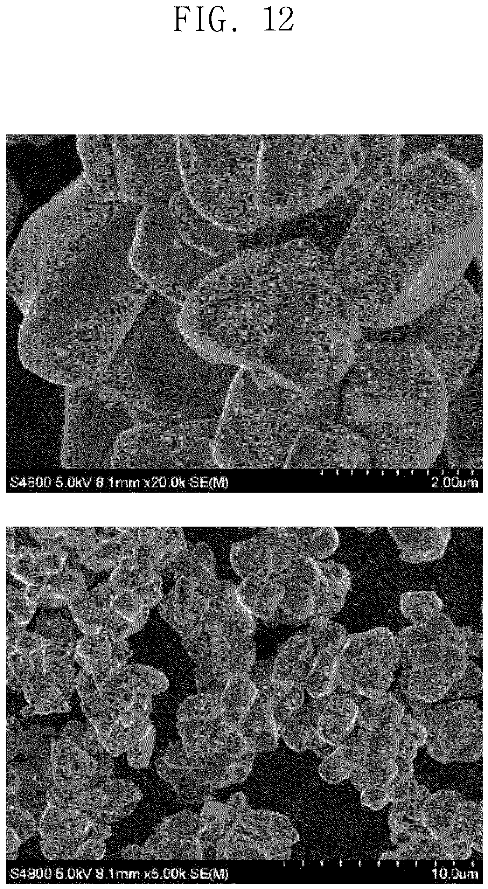

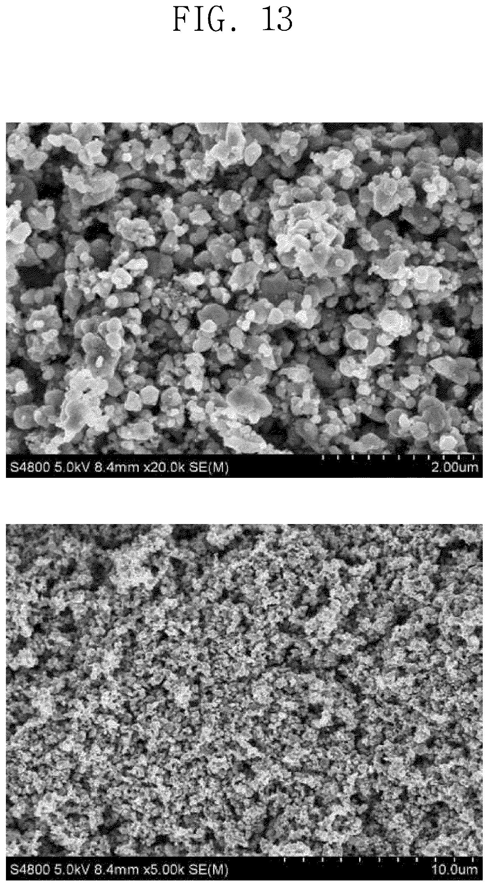

SEM images for each of the first particle and the second particle prepared in Preparation Examples 1 and 4 are shown in FIGS. 12 and 13. Referring to FIG. 12, it is seen that the first particle according to Preparation Example 1 of the present disclosure is in the form of a micro-sized single particle. Referring to FIG. 13, it is seen that the second particle according to Preparation Example 4 of the present disclosure is in the form of a nano-sized fine single particle.

<u>**Evaluation Example** 2: **Evaluation of Active Material**</u>

Pellet density (PD) of the positive electrode active materials of Examples, Comparative Examples, and the Reference Example was measured, and the results are shown in Table 3 below.

Table 3:

| Item | Pellet density (g/cc) |
|---|---|
| Example 1 | 2.75 |
| Example 2 | 2.55 |
| Example 3 | 2.55 |
| Comparative Example 1 | 3.10 |
| Comparative Example 2 | 2.35 |
| Comparative Example 3 | 2.88 |
| Comparative Example 4 | 2.80 |
| Comparative Example 5 | 2.73 |
| Comparative Example 6 | 2.65 |
| Comparative Example 7 | 2.58 |
| Comparative Example 8 | 2.50 |
| Comparative Example 9 | 2.43 |

(continued)

| Item | Pellet density (g/cc) |
|---|---|
| Comparative Example 10 | 3.10 |
| Comparative Example 11 | 2.56 |
| Comparative Example 12 | 3.75 |
| Comparative Example 13 | 2.75 |
| Comparative Example 14 | 2.75 |
| Reference Example 1 | 2.75 |

**Evaluation Example 3: Evaluation of Resistance and Binding force**

Characteristics of rechargeable lithium batteries prepared using positive electrode active materials each from Examples, Comparative Examples, and the Reference Example were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C to measure the initial charge capacity (Initial Charge capacity at 0.2 C) and initial discharge capacity (Initial Discharge capacity at 0.2 C). The efficiency at 0.2 C (%) is expressed as the initial discharge capacity at 0.2 C /initial charge capacity at 0.2 C. The rechargeable lithium batteries were charged to SOC50 at a constant current of 0.2 C, and then rest for 1 hour at SOC50. After that, the rechargeable lithium batteries were discharged at 1.0 C for 10 seconds, followed by another 10-second rest. At this point, the difference between the voltage after the discharge and the voltage after the 10-second rest was divided by the current to calculate the cell resistance (DC-IR). The results are shown in Table 4 below.

Table 4:

| Item | Charge amount at 0.2 C (mAh/g) | Discharge amount at 0.2 C (mAh/g) | Efficiency at 0.2 C (%) | DCIR, SOC50 ($\Omega$, 0.2 C/1.0 C) |
|---|---|---|---|---|
| Example 1 | 175.4 | 161.2 | 91.9 | 28.0 |
| Example 2 | 175.9 | 161.8 | 92.0 | 18.5 |
| Example 3 | 175.5 | 161.4 | 92.0 | 22.0 |
| Comparative Example 1 | 221.3 | 196.3 | 88.7 | 5.5 |
| Comparative Example 2 | 155.0 | 145.0 | 93.5 | 43.0 |
| Comparative Example 3 | 201.4 | 180.9 | 89.8 | 16.8 |
| Comparative Example 4 | 194.8 | 175.8 | 90.2 | 20.5 |
| Comparative Example 5 | 188.2 | 170.7 | 90.7 | 24.3 |
| Comparative Example 6 | 181.5 | 165.5 | 91.2 | 28.0 |
| Comparative Example 7 | 174.9 | 160.4 | 91.7 | 31.8 |
| Comparative Example 8 | 168.3 | 155.3 | 92.3 | 35.5 |
| Comparative Example 9 | 161.6 | 150.1 | 92.9 | 39.3 |
| Comparative Example 10 | 220.3 | 195.2 | 88.6 | 7.8 |
| Comparative Example 11 | 173.9 | 159.8 | 91.9 | 31.2 |
| Comparative Example 12 | 221.3 | 196.2 | 88.7 | 7.0 |
| Comparative Example 13 | 175.1 | 160.3 | 91.5 | 33 |
| Comparative Example 14 | 172.7 | 158.5 | 91.8 | 30 |
| Reference Example 1 | 170.2 | 156.2 | 91.8 | 32 |

Referring to Table 4, the rechargeable lithium batteries including the positive electrodes according to Examples 1

# EP 4 645 421 A1

to 3 have a higher discharge amount and lower resistance than Comparative Examples 2, 7, 11, and 13. Accordingly, the positive electrode containing the olivine-based compound may have a greater binding force with the introduction of the first active material layer containing the first particle.

## Evaluation Example 4: Evaluation of Battery Properties

Characteristics of rechargeable lithium batteries prepared using positive electrode active materials each from Examples, Comparative Examples, and the Reference Example were evaluated.

For initial charging/discharging, the rechargeable lithium batteries were initially charged at a constant current of 0.2 C and a constant voltage (4.45 V) (cut-off 0.05C) at 25 °C, and after 10 minutes of rest, discharged up to 3.0 V at a constant current of 0.2 C, and the average voltage was subsequently evaluated. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) x capacity (Ah)/cell weight (kg)}, wherein the capacity was calculated by multiplying a positive electrode weight (g) and discharge capacity (mAh/g). Thereafter, the charging/discharging was repeated 50 times at 45 °C and 1.0 C/1.0 C. The lifetime (%, @ 50ccl) is expressed as the discharge capacity after the 50th cycle / initial discharge capacity. Coin cells were additionally prepared and the batteries were initially charged at a constant current of 0.2 C and a constant voltage (4.45 V) (cut-off 0.05C) and after 10 minutes of rest, discharged up to 3.0 V at a constant current of 0.2 C and additionally charged, and measured at -20 °C for discharge capacity. The results of evaluating the battery properties are shown in Table 5 below.

Table 5:

| Item | Capacity at -20 °C (mAh/g) | Average voltage | Lifetime at 1 C (%, @50ccl) | Energy density (Wh/kg) |
|---|---|---|---|---|
| Example 1 | 83 | 3.62 | 99.7 | 580 |
| Example 2 | 80 | 3.62 | 99.8 | 582 |
| Example 3 | 82 | 3.62 | 99.8 | 581 |
| Comparative Example 1 | 65 | 3.65 | 98.4 | 636 |
| Comparative Example 2 | 96 | 3.60 | 99.1 | 478 |
| Comparative Example 3 | 74 | 3.64 | 98.6 | 658 |
| Comparative Example 4 | 77 | 3.63 | 98.7 | 638 |
| Comparative Example 5 | 81 | 3.63 | 98.8 | 619 |
| Comparative Example 6 | 84 | 3.62 | 98.8 | 599 |
| Comparative Example 7 | 87 | 3.62 | 98.9 | 578 |
| Comparative Example 8 | 90 | 3.61 | 99.0 | 556 |
| Comparative Example 9 | 93 | 3.61 | 99.0 | 533 |
| Comparative Example 10 | 70 | 3.65 | 99.1 | 631 |
| Comparative Example 11 | 87.0 | 3.63 | 99.0 | 578 |
| Comparative Example 12 | 65 | 3.65 | 99.2 | 739 |
| Comparative Example 13 | 86.1 | 3.62 | 99.2 | 579 |
| Comparative Example 14 | 86.5 | 3.61 | 98.5 | 570 |
| Reference Example 1 | 90 | 3.60 | 97.8 | 561 |

Referring to Tables 4 and 5, the rechargeable lithium batteries including the positive electrodes according to Examples 1 to 3 have desired or improved capacity and lifetime characteristics along with high operating voltage and energy density.

A positive electrode for a rechargeable lithium battery according to an example embodiment of the present disclosure contains a nano-sized olivine-based compound in large quantities and increases the binding force with respect to a current collector, and may thus facilitate the preparation of an electrode plate and reduce the resistance of an electrode plate.

A rechargeable lithium battery according to an example embodiment of the present disclosure may have desired or improved capacity and lifetime characteristics along with high operating voltage and energy density.

Although the example embodiments of the present disclosure have been described above with reference to the accompanying drawings, the present disclosure may be applied in other specific forms without changing the technical idea or essential features thereof. Therefore, it should be understood that the example embodiments described above are presented as examples in all respects and not restrictive.

**Claims**

1. A positive electrode for a rechargeable lithium battery, the positive electrode comprising:

   a current collector;
   a first active material layer on the current collector, the first active material layer including a first particle, a first binder, and a first conductive material; and
   a second active material layer on the first active material layer, the second active material layer including a second particle, a second binder, and a second conductive material,
   wherein the first particle contains a layered compound of Formula 1,
   the second particle contains an olivine structured compound of Formula 2,
   the second particle is a single particle,
   the first binder and the first conductive material constitute a first functional additive,
   the second binder and the second conductive material constitute a second functional additive, and
   a weight ratio of the first functional additive in the first active material layer is lower than a weight ratio of the second functional additive in the second active material layer,

   $$\text{Formula 1:} \qquad Li_{a1}Ni_{x1}Co_{y1}Mn_{z1}B1_{c1}O_{2-b1}$$

   wherein in Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 \leq b1 \leq 0.05$, and $x1 + y1 + z1 + c1 = 1$ are satisfied, and
   B1 includes at least one of Ti, Mg, V, Nb, and Al, and

   $$\text{Formula 2:} \qquad Li_{a2}Mn_{x2}Fe_{y2}B2_{z2}PO_{4-b2}$$

   wherein in Formula 2 above, $0.8 \leq a2 \leq 1.2$, $0.4 \leq x2 \leq 0.8$, $0 \leq y2 \leq 0.6$, $0 \leq z2 \leq 0.05$, $0 \leq b2 \leq 0.05$, and $x2 + y2 + z2 = 1$ are satisfied, and
   B2 includes at least one of Al, Ti, V, and Mg.

2. The positive electrode for a rechargeable lithium battery of claim 1, wherein a ratio of the weight ratio of the second functional additive to the weight ratio of the first functional additive is in a range of about 1.5 to about 3.

3. The positive electrode for a rechargeable lithium battery of claim 1 or claim 2, wherein the content of the first binder is less than the content of the second binder.

4. The positive electrode for a rechargeable lithium battery of any one of claims 1 to 3, wherein the content of the first binder is in a range of about 1.2 parts by weight to about 2 parts by weight with respect to 100 parts by weight of the first active material layer, and
   the content of the second binder is in a range of about 2 parts by weight to about 3 parts by weight with respect to 100 parts by weight of the second active material layer.

5. The positive electrode for a rechargeable lithium battery of any one of claims 1 to 4, wherein the content of the first conductive material is less than the content of the second conductive material.

6. The positive electrode for a rechargeable lithium battery of any one of claims 1 to 5, wherein the content of the first conductive material is in a range of about 1.2 parts by weight to about 2 parts by weight with respect to 100 parts by weight of the first active material layer, and
   the content of the second conductive material is in a range of about 2 parts by weight to about 3 parts by weight with respect to 100 parts by weight of the second active material layer.

7.  The positive electrode for a rechargeable lithium battery of any one of claims 1 to 6, wherein a weight ratio of the first particle and the second particle included in the first and second active material layers is in a range of about 10:90 to about 30:70.

8.  The positive electrode for a rechargeable lithium battery of any one of claims 1 to 7, wherein a total doping content of Mn included in the first active material layer and the second active material layer is in a range of about 0.49 to about 0.53.

9.  The positive electrode for a rechargeable lithium battery of any one of claims 1 to 8, wherein the first particle is a single crystal.

10. The positive electrode for a rechargeable lithium battery of any one of claims 1 to 9, wherein the first particle is a single particle, and
    the first particle has an average particle diameter in a range of about 3 $\mu$m to about 10 $\mu$m.

11. The positive electrode for a rechargeable lithium battery of any one of claims 1 to 8, wherein the first particle is in the form of a secondary particle that includes a plurality of primary particles,

    the first particle has an average particle diameter in a range of about 10 $\mu$m to about 25 $\mu$m, and
    the primary particles have an average particle diameter in a range of about 8 $\mu$m or less.

12. The positive electrode for a rechargeable lithium battery of any one of claims 1 to 11, wherein the first particle comprises a single particle and a secondary particle.

13. The positive electrode for a rechargeable lithium battery of any one of claims 1 to 12, wherein the first particle has a BET specific surface area in a range of about 0.8 m$^2$/g to about 1.2 m$^2$/g.

14. The positive electrode for a rechargeable lithium battery of any one of claims 1 to 13, wherein the second particle has an average particle diameter in a range of about 100 nm to about 2 $\mu$m.

15. The positive electrode for a rechargeable lithium battery of any one of claims 1 to 14, wherein the second particle comprises a coating layer containing carbon, and
    the second particle contains about 1.5 wt% to about 2.5 wt% of carbon.

# FIG. 1

# FIG. 2

# FIG. 3

EP 4 645 421 A1

# FIG. 4

# FIG. 5

# FIG. 6

10

AML1 { ATL2

ATL1

COL1

T2

T1

# FIG. 7

ATL1

PTC1(SP)

BND1
CDM1
FAD1

# FIG. 8

# FIG. 9

# FIG. 10

ATL2

PTC2

CDM2

BND2

FAD2

# FIG. 11

AML1

NP

CDM

BND

# FIG. 12

# FIG. 13

Europäisches
Patentamt

European
Patent Office

Office européen
des brevets

# EUROPEAN SEARCH REPORT

**Application Number**

EP 25 16 7791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/303730 A1 (HOSHINA KEIGO [JP] ET AL) 24 September 2020 (2020-09-24) | 1-15 | INV.<br>H01M4/13 |
| Y | * paragraphs [0003], [0005], [0016], [0025], [0077], [0087] - [0089], [0122], [0199]; figures 1,2; example 10 * | 1-15 | H01M4/36<br>H01M4/505<br>H01M4/525<br>H01M4/58 |
|  | ----- | | C01B25/45<br>C01G53/50 |
| Y | CN 117 133 860 A (NINGDE CONTEMPORARY AMPEREX TECH CO LTD) 28 November 2023 (2023-11-28) * paragraphs [0002], [0005], [0006], [0074] - [0077]; figures 4,6,8; example 1 * | 1-15 | ADD.<br>H01M4/62<br>H01M10/0525 |
|  | ----- | | |
| A | US 2023/016319 A1 (TAKEGUCHI NAOKI [JP]) 19 January 2023 (2023-01-19) * paragraphs [0002] - [0006], [0053] - [0055]; figures 1,2; example 1 * | 1-15 | |
|  | ----- | | |
| A | US 2020/161632 A1 (YAMASHITA HIROKI [JP] ET AL) 21 May 2020 (2020-05-21) * the whole document * | 1-15 | |
|  | ----- | | **TECHNICAL FIELDS SEARCHED (IPC)**<br><br>H01M |

The present search report has been drawn up for all claims

| Place of search | Date of completion of the search | Examiner |
|---|---|---|
| The Hague | 14 July 2025 | Ferreira Marinha, D |

EPO FORM 1503 03.82 (P04C01)

## ANNEX TO THE EUROPEAN SEARCH REPORT
## ON EUROPEAN PATENT APPLICATION NO.

EP 25 16 7791

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | Publication date |
|---|---|---|---|
| US 2020303730 A1 | 24-09-2020 | NONE | |
| CN 117133860 A | 28-11-2023 | NONE | |
| US 2023016319 A1 | 19-01-2023 | JP 7686477 B2 | 02-06-2025 |
| | | JP 2023010319 A | 20-01-2023 |
| | | US 2023016319 A1 | 19-01-2023 |
| US 2020161632 A1 | 21-05-2020 | CN 110462896 A | 15-11-2019 |
| | | EP 3633775 A1 | 08-04-2020 |
| | | JP 6549807 B2 | 24-07-2019 |
| | | JP WO2018221263 A1 | 27-06-2019 |
| | | KR 20190120377 A | 23-10-2019 |
| | | US 2020161632 A1 | 21-05-2020 |
| | | WO 2018220972 A1 | 06-12-2018 |
| | | WO 2018221263 A1 | 06-12-2018 |

EPO FORM P0459

For more details about this annex : see Official Journal of the European Patent Office, No. 12/82